# EUROPÄISCHE PATENTSCHRIFT

(11) **EP 1 847 330 B1**
(45) Veröffentlichungstag und Bekanntmachung des Hinweises auf die Patenterteilung: **16.02.2011**
(21) Anmeldenummer: 07007140.2
(22) Anmeldetag: 05.04.2007
(51) Int. Cl.: B21C 37/08, B23K 26/26, B23K 26/32, E04H 17/20, B21C 37/09

(54) **Verfahren zur Erzeugung eines Hohlkörpers aus einem Metallbandmaterial**
Method for producing a hollow body from a metal strip
Procédé de production d'un profil tubulaire à partir d'un matériau métallique en bande

(30) Priorität: 19.04.2006 DE 102006018192; 24.11.2006 DE 102006055462
(43) Veröffentlichungstag der Anmeldung: 24.10.2007
(73) Patentinhaber: Gebhardt-Stahl GmbH, 59457 Werl (DE)
(72) Erfinder: Gebhardt, Manfred, 59494 Soest (DE); Hesse, Martin, 33142 Büren-Steinhausen (DE); Luig, Klaus, 58739 Wickede / Ruhr (DE)
(74) Vertreter: Meinke, Dabringhaus und Partner GbR

(56) Entgegenhaltungen:
- WO-A-95/29033
- CH-A- 512 287
- CH-A5- 694 013
- DE-A1- 3 047 088
- DE-A1- 4 339 661
- DE-C- 589 912
- FR-A- 2 765 609

## Beschreibung

Die Erfindung richtet sich auf ein Verfahren zur Erzeugung eines Hohlkörpers aus einem Metallbandmaterial, wobei im Zuge des Kaltwalzens dem Hohlkörper die endgültige Querschnittsform verliehen wird.

Bei der Herstellung derartiger Hohlprofile ist es bekannt, im Verbindungsbereich die freien Randkanten des Bleches etwa miteinander durch Kaltverformung zu verkröpfen oder den Überlappungsbereich durch Punktschweißung miteinander zu verbinden. Aus der DE 38 42 865 ist auch ein Verfahren zur Herstellung eines Längsnahtrohres bekannt, bei dem unter Zusammendrücken der Längsnaht eine unterbrochene Lasernahtschweißung vorgesehen ist. Werden hochwertige Hohlprofile gewünscht, erfüllen häufig diese Art der Verbindungstechniken nicht die gewünschten Anforderungen, so dass man hier zum Teil sehr aufwändige Verbindungstechnologien einsetzt.

Im Stand der Technik sind weitere Verfahrensweisen insbesondere auch für die Laserschweißung bekannt. So zeigt die DE 43 39 661 A1 die Herstellung eines rohrförmigen Rohlings aus Fein- oder Feinstblech, um z.B. Getränkedosen herzustellen. Die Herstellung eines Dosenrumpfes in vergleichsweiser Technik zeigt auch die CH 694 013 A5. Das Schweißen von kunststoffbeschichteten Metallen ist Gegenstand der WO 95/29033, wobei ein Punkt- und Rollnahtverschweißen bei kunststoffbeschichteten Blechen auch in der CH 512 287 beschrieben ist.

Die vorbeschriebenen Verfahrensweisen sind zum Teil vergleichweise aufwändig und damit wirtschaftlich unbefriedigend, insbesondere wenn stark strukturierte Querschnittsformen im Kaltwalzverfahren bei kunststoffbeschichten Blechen zum Einsatz kommen.

Hier setzt die Erfindung an, deren Ziel darin besteht, ein Verfahren zur Erzeugung eines Hohlkörpers anzubieten, das einfach in der Anwendung bei gleichzeitig hochwertiger Gestaltung des Endproduktes ist und insbesondere für unterschiedlich vorpräparierte Bandmaterialien geeignet ist bei gleichzeitigem Schutz der Verbindungsnaht.

Mit einem Verfahren der eingangs bezeichneten Art wird diese Aufgabe gemäß der Erfindung dadurch gelöst,
- dass ein kunststoffbeschichtetes Metallbandmaterial eingesetzt wird, wobei die Längsränder des kunststoffbeschichteten Bandmateriales auf Stoß nebeneinander geführt und mittels einer Laserverschweißung verbunden werden und
- dass bei der Profilierung des Hohlkörpers, wie beispielsweise eines Zaunpfostens mit Fixierstegen, die Längsstoßkante des Bandmateriales auf einer Profilfläche außermittig zur Flächenmittenebene positioniert wird, derart, dass Ausbrechungen und/oder Lochungen in einem Schweißnaht freien Flächenbereich einbringbar sind.

Es gibt eine Fülle von Produkten insbesondere aus metallischen Hohlprofilen, wobei deren metallische Oberfläche mit einer Schutzschicht versehen ist, z.B. einer Kunststoffbeschichtung. An dieser Stelle sei bemerkt, dass mit dem Ausdruck "Kunststoffbeschichtung" jede Art der nichtmetallischen Oberflächenveredelung gemeint ist. Hier können natürlich auch Lacke u. dgl. vorgesehen sein.

War man zunächst der Meinung, dass derartig beschichtetes Bandmaterial mittels Laserschweißens nicht zu verbinden ist, so zeigt die Erfindung, dass dies sehr wohl möglich ist mit extrem guten Endergebnissen, was die Maßhaltigkeit und die Qualität des so erzeugten Hohlkörpers angeht, der mittels der erfindungsgemäßen Verfahrensweise im Endlosdurchlauf erzeugbar ist.

Die erfindungsgemäße Ausgestaltung ist auch dann von besonderem Vorteil, wenn in die so hergestellten Hohlkörper nachträglich Ausklinkungen, Bohrungen od. dgl. eingebracht werden müssen, die dann dort platzierbar sind, wo sich keine Längsschweißnaht befindet.

Ausgestaltungen der Erfindung ergeben sich aus den Unteransprüchen. So sieht die Erfindung Vorbehandlungsschritte der freien Stoßkanten vor. Die Bandrandbereiche können mechanisch, z.B. durch Schaben, Fräsen, Schleifen od. dgl., begradigt werden, um eine optimale Stoßfuge zu gewährleisten. Auch können beschichtete Oberflächenbereiche unmittelbar neben den Stoßkanten von der Lackierung bzw. der sonstigen Beschichtung mechanisch befreit werden.

Wesentlich ist für die Erfindung auch eine weitere Ausgestaltung, die darin besteht, dass nach der Laserschweißung der Schweißnahtbereich einem Nachbehandlungsschritt, insbesondere einer Versiegelung, unterzogen wird. Mit diesem Nachbehandlungsschritt ist es möglich, praktisch korrosionsfreie Endprodukte zu erzeugen, indem der Schweißnahtbereich entsprechend versiegelt wird.

Die Versiegelung kann in erfindungsgemäßer Ausgestaltung mit einem nicht metallischen Material vorgenommen werden, etwa mit einer Schmelzkleberversiegelung und/oder einer Lackierung, wobei insbesondere ein unter UV-Licht schnell aushärtender Lack mittels eines Sprühkopfes aufgetragen werden kann.

Weitere Merkmale, Einzelheiten und Vorteile der Erfindung ergeben sich aufgrund der nachfolgenden Beschreibung sowie anhand der Zeichnung. Diese zeigt in
- Fig. 1: die räumliche Darstellung, teilweise geschnitten, eines nach dem erfindungsgemäßen Verfahren herge- stellten Hohlkörpers, beispielsweise eines Zaun- pfostens,
- Fig. 2: das Produkt gemäß Fig. 1 in der in der Praxis vor- kommenden Einbausituation,
- Fig. 3: in vereinfachter Darstellung die Aufbringung einer Schweißnahtversiegelung mit einem mit Schmelzkleber benetzten Deckband,
- Fig. 4: eine etwas andere Art der Aufbringung eines Schweiß- nahtdeckbandes,
- Fig. 5: die Möglichkeit einer Lackierung der Schweißnaht mit anschließender UV-Behandlung sowie in
- Fig. 6: eine vereinfachte Darstellung einer Seitenansicht einer Anlage zur Durchführung des erfindungsgemäßen Verfahrens.

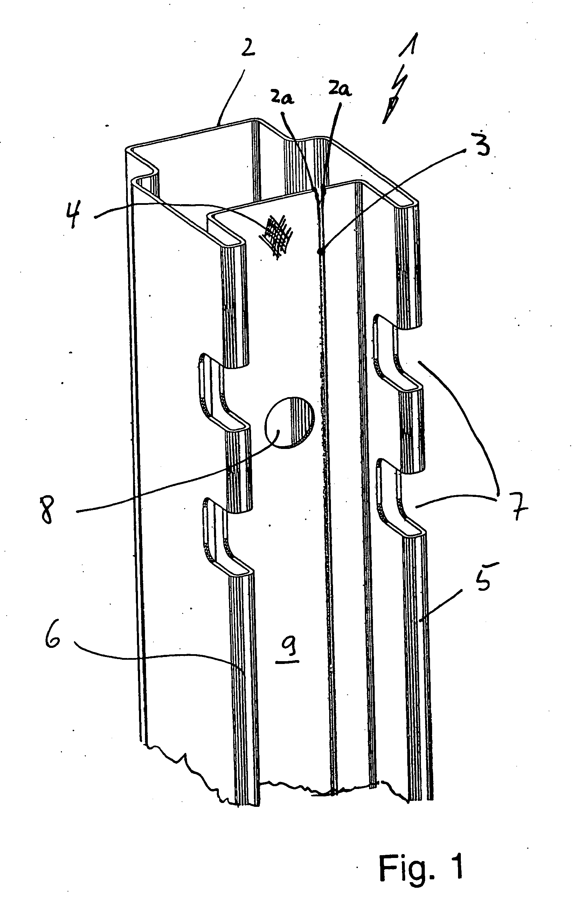

Fig. 1 zeigt lediglich als Beispiel das obere Ende eines Hohlprofiles, allgemein mit 1 bezeichnet, bei dem es sich beispielsweise um einen zaunpfosten handeln kann. Dieser Hohlkörper ist aus einem Metallband 2 kaltverformt, in die in Fig. 1 dargestellte Form gebracht worden, wobei die mit 2a und 2b bezeichneten freien Randkanten des Blechbandes so zueinander geführt sind, dass sie mittels einer Laserverschweißung miteinander verbindbar sind. Diese Laserschweißnaht ist in Fig. 1 mit 3 bezeichnet.

Die äußere Oberfläche des Bandmateriales ist beschichtet. Diese Beschichtung ist in Fig. 1 lediglich andeutungsweise schraffiert dargestellt und mit 4 bezeichnet. Dabei kann es sich um eine Beschichtung mittels eines Kunstharzes, eines Kunststoffes, eines entsprechend kunststoffbasierten Lackes handeln u. dgl. mehr. Wie sich aus Fig. 1 auch ergibt, wird der Hohlkörper so geformt, dass Randstege 5 und 6 gebildet werden, in die Ausbrechungen 7 eingestanzt sind, um später z.B. Gittermatten einhängen zu können. Zur Fixierung können Verschraubungen vorgesehen sein, hierzu weist der Hohlkörper über seine Länge verteilt Durchgangsbohrungen 8 auf.

Die zwischen den Stegen 5 und 6 vorgesehene Wandfläche des Hohlkörpers, allgemein mit 9 bezeichnet, trägt diese Durchgangsbohrung 8 ebensowie die Schweißnaht 3, dabei ist aus Fig. 1 ersichtlich, dass diese Schweißnaht 3 aus der Mitte (in Fig. 1 nach rechts) derart verschoben ist, dass die Durchgangsbohrung 8 diesen Schweißnahtbereich nicht trifft.

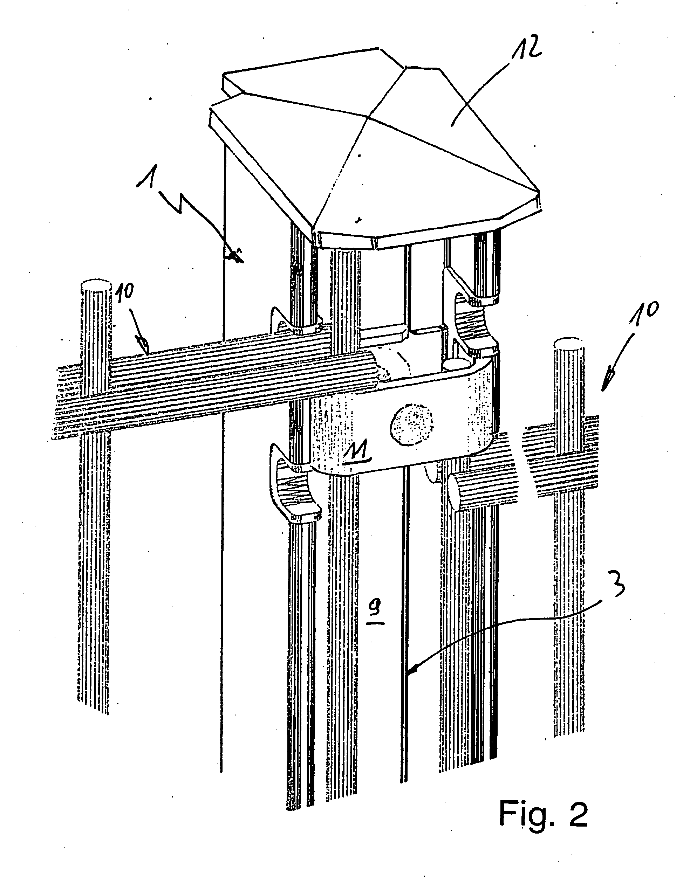

Fig. 2 zeigt einen entsprechenden Hohlkörper 1, in den Gittermatten, allgemein mit 10 bezeichnet, eingehängt sind, die mit einer Schraubbrücke 11 am Hohlkörper 1 befestigt sind, der auf seiner Oberseite eine Kunststoff- oder Druckgussabdeckung 12 trägt. Auch wird erkennbar, dass die Laserschweißnaht 3 "exzentrisch" auf der einen Fläche, mit 9 bezeichnet, des Hohlkörpers angeordnet ist.

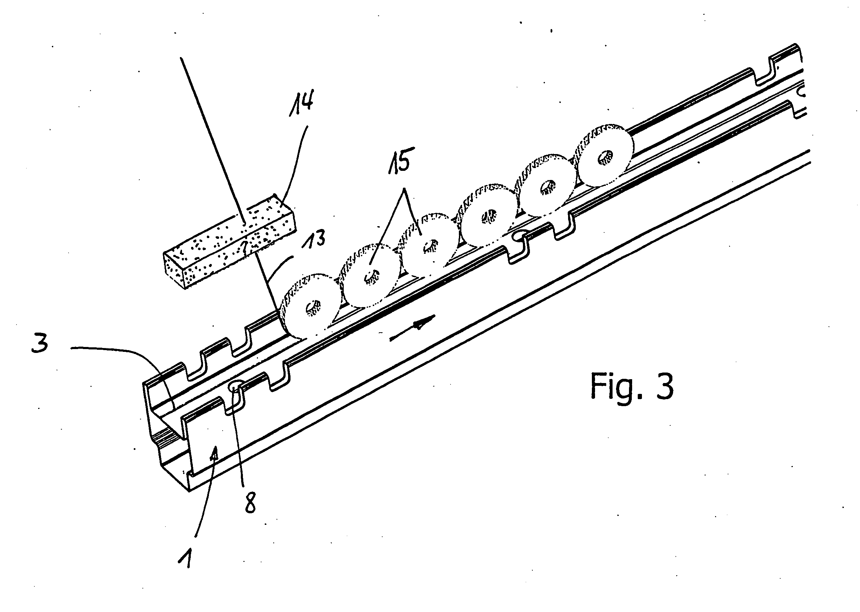

In den Fig. 3 bis 5 sind unterschiedliche Möglichkeiten gezeigt, die Stoßkantenschweißnaht 3 nachzubehandeln, wobei in den Figuren Vorbehandlungsschritte der Ränder 2a und 2b vor der Laserschweißung nicht näher dargestellt sind.

In Fig. 3 ist eine Möglichkeit dargestellt ein mit einem PUR-Schmelzstoff benetztes Deckband, allgemein mit 13 bezeichnet, aufzubringen, wobei das Band zunächst durch eine Schmelzkleberbenetzungseinrichtung 14 geführt wird und dann mittels Druckrollen 15 aufgepresst wird. Soweit Klebstoff-Antrocknungseinrichtungen benötigt werden, sind die in Fig. 3 nicht näher dargestellt.

Aus Fig. 3 ergibt sich auch der Vorteil, die Schweißnaht 3 exzentrisch anzuordnen, derart, dass die Schweißnaht selbst nicht durch Durchgangsbohrungen 8 geführt ist, so dass auch die Anpressrollen 15 störungsfrei abrollen können, was bei einer Perforierung der Schweißnaht nicht gewährleistet wäre.

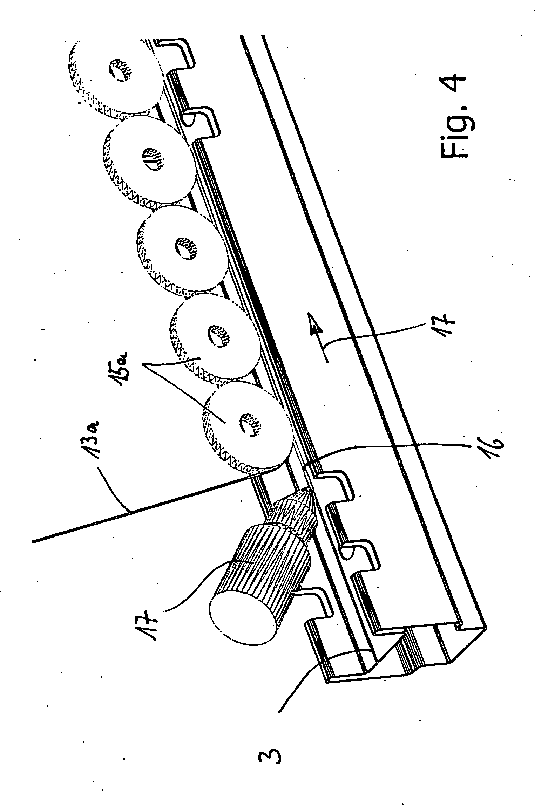

In Fig. 4 ist ein etwas abgewandeltes Beispiel wiedergegeben. Hier wird das Schweißnahtabdeckband 13a mittels Druckrollen 15a auf die mit einem Primer vorbehandelte Schweißnaht gepresst, die vorher mit einer Schmelzkleberschicht 16 auf einer Schmelzkleberbenetzungsanlage 17 versehen worden war. Der Ausdruck "vorher" bezieht sich auf die mit einem kleinen Pfeil 17 angedeutete Laufrichtung.

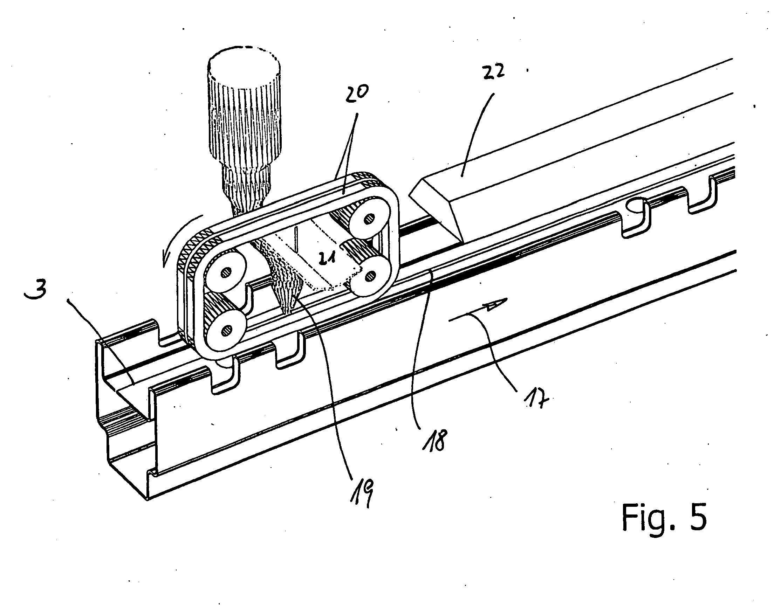

In Fig. 5 ist ein weiteres abgewandeltes Beispiel dargestellt. Hier wird die vorbehandelte Schweißnaht 3 mit einer Lackschicht 18 versehen, die mittels eines Farbsprühkopfes 19 auf die Schweißnaht 3 aufgebracht wird, wobei umlaufende Sprühnebel-Begrenzungsbänder 20, die mit einem Lackabschaber bzw. Abstreifer 21 ausgerüstet sind, dafür sorgen, dass die Lackschicht 18 eine vordefinierte Breite aufweist. Zur Aushärtung des Lackes können beispielsweise UV-Lampen 22 über der durchlaufenden Laserschweißnaht angeordnet sein, auch dies ist in Fig. 5 angedeutet.

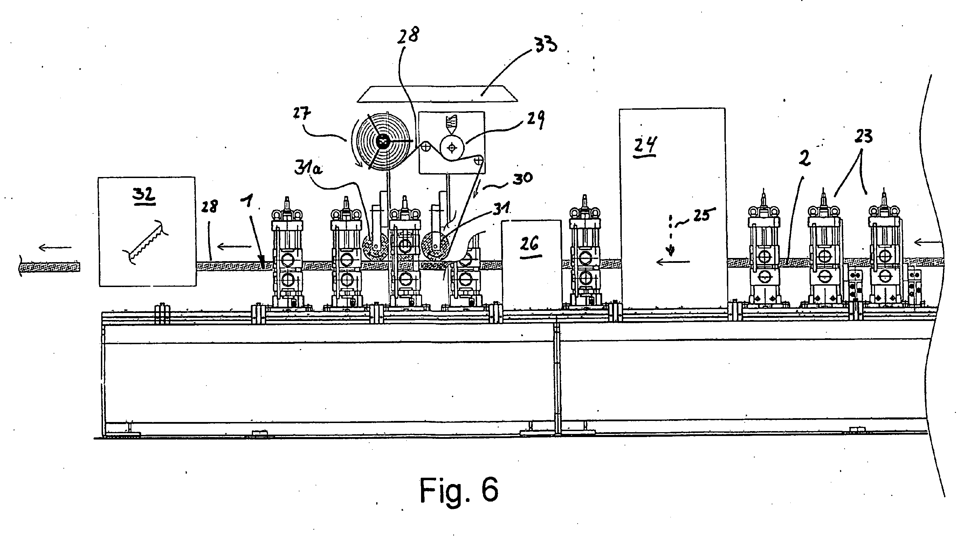

Eine Zusammenschau einer Anlage, insbesondere zur Aufbringung eines Bandfolienschutzes der Laserschweißnaht zeigt Fig. 6, wobei im dargestellten Beispiel einer Kaltverformungsanlage zur Herstellung des Metallhohlprofiles 1 eine Mehrzahl von hier nicht näher dargestellten Walz- und Verformungsgerüsten 23 zugeordnet ist.

Wird beispielsweise ein Kastenhohlprofil erzeugt, befinden sich nach dem Verformungsvorgang die Stoßkanten des so verformten Bleches auf der Oberseite des Profiles 1, so dass dann eine Laserschweißeinrichtung, allgemein mit 24 bezeichnet, mittels eines Laserstrahles, punktiert angedeutet und mit 25 bezeichnet, das Profil durch eine schließende Naht 3 fertigstellen kann. Die so hergestellte Schweißnaht 3 und die unmittelbare Umgebung des Hohlprofiles wird in einer Reinigungsanlage 26 gereinigt, etwa mechanisch oder mit Ultraschall od. dgl.

Zur Versiegelung der Schweißnaht wird aus einem Reservoir, d.h. von einer Trommel 27, ein Acrylat-/PVC-Folienband 28 abgezogen, mittels einer Auftragswalze 29 mit z.B. einem PUR-Schmelzkleber benetzt und in Richtung auf die mit einem Primer vorbehandelte Schweißnaht weitergefördert, was in der Figur mit einem kleinen Pfeil 30 angedeutet ist.

Statt der einen Auftragsrolle 29 können hier auch mehrere Auftragsrollen unterschiedlicher Produkte vorgesehen sein, worauf es hier nicht näher ankommt.

Das benetzte Acrylat-/PVC-Folienband wird dann mittels einer Andruckrolle 31 auf die Schweißnaht gepresst, ggf. durch eine weitere Anpressrolle 31a nachverdichtet, wobei zusätzliche Heiz- oder Kühlgebläse vorgesehen sein können, was in der Figur nicht näher dargestellt ist. Das so gefertigte und versiegelte Profil kann dann in einer Sägeeinrichtung 32 auf die gewünschten, dem weiteren Verbrauch angepassten Längen zugeschnitten werden.

Durch die freigesetzten Dämpfe beim Versiegelungsprozess kann es zweckmäßig sein, die erfindungsgemäße Vorrichtung insgesamt mit einem Absauggebläse zu versehen, eine Abzugshaube 33 ist in der Figur lediglich andeutungsweise symbolisch wiedergegeben.

Natürlich ist das beschriebene Ausführungsbeispiel der Erfindung noch in vielfacher Hinsicht abzuändern, ohne den Grundgedanken zu verlassen, wobei entscheidend ist, dass nach der Laserverschweißung die Schweißnaht so durchlaufend nachbehandelt wird, dass der Schutz des Nahtbereiches gewährleistet ist.

## Patentansprüche

1. Verfahren zur Erzeugung eines Hohlkörpers aus einem Metallbandmaterial, wobei im Zuge des Kaltwalzens dem Hohlkörper die endgültige Querschnittsform verliehen wird, wobei
- ein kunststoffbeschichtetes Metallbandmaterial eingesetzt wird, wobei die Längsränder des kunststoffbeschichteten Bandmateriales auf Stoß nebeneinander geführt und mittels einer Laserverschweißung verbunden werden und **dadurch gekennzeichnet, dass** bei der Profilierung des Hohlkörpers, wie beispielsweise eines Zaunpfostens mit Fixierstegen, die Längsstoßkante des Bandmateriales auf einer Profilfläche außermittig zur Flächenmittenebene positioniert wird, derart, dass Ausbrechungen und/oder Lochungen in einem Schweißnaht freien Flächenbereich einbringbar sind.

2. Verfahren nach Anspruch 1,
**dadurch gekennzeichnet,**
**dass** die freien Stoßkanten des kunststoffbeschichteten Bandmateriales vor dem Laserschweißen einem Vorbehandlungsschritt unterzogen werden, wobei insbesondere die freien Stoßkanten mittels eines mechanischen Vorbehandlungsschrittes, wie Schaben, Fräsen, Schleifen od. dgl., zur stumpfen Aneinanderführung begradigt werden, wobei insbesondere auf den Oberflächen der freien Stoßkanten ein partielles Abtragen der Kunststoffbeschichtung bzw. der Lackbeschichtung vorgenommen wird.

3. Verfahren nach Anspruch 1 oder 2,
**dadurch gekennzeichnet,**
**dass** nach der Laserschweißung der Schweißnahtbereich einem Nachbehandlungsschritt, insbesondere einer Versiegelung mit einem nicht metallischen Material, unterzogen wird.

4. Verfahren nach Anspruch 3,
**dadurch gekennzeichnet,**
**dass** als nicht metallische Versiegelung eine Schmelzkleberversiegelung und/oder eine Lackierung vorgenommen wird, wobei insbesondere ein unter UV-Licht schnell aushärtender Lack mittels eines Sprühkopfes aufgesprüht wird.

## Claims

1. A process for producing a hollow body from a metal strip material, wherein the definitive cross-sectional shape is imparted to the hollow body in the course of the cold rolling operation, wherein
- a plastic-coated metal strip material is used, wherein the longitudinal edges of the plastic-coated strip material are guided in butting mutually juxtaposed relationship and are joined by means of laser welding,
**characterised in that** in the profiling of the hollow body such as for example a fence post with fixing arms, the longitudinal butting edge of the strip material is positioned on a profile surface eccentrically relative to the central plane of the surface in such a way that openings and/or holes can be introduced in a weld seam-free surface region.

2. A process according to claim 1 **characterised in that** the free butting edges of the plastic-coated strip material are subjected to a preliminary treatment step prior to the laser welding operation, wherein in particular the free butting edges are levelled by means of a mechanical preliminary treatment step such as shaving, milling, grinding or the like for bringing them obtusely together, wherein partial removal of the plastic coating or the lacquer coating is effected in particular on the surfaces of the free butting edges.

3. A process according to claim 1 or claim 2 **characterised in that** after the laser welding operation the weld seam region is subjected to a post-treatment step, in particular sealing with a non-metallic material.

4. A process according to claim 3 **characterised in that** melt adhesive sealing and/or lacquering is effected as the non-metallic sealing, wherein in particular a lacquer which hardens quickly under UV light is sprayed on by means of a spray head.

## Revendications

1. Procédé de production d'un corps creux à partir d'un matériau métallique en bande, dans lequel, au cours d'un laminage à froid on confère au corps creux la forme de section transversale définitive, dans lequel
- on emploie un matériau métallique en bande revêtue de matière plastique, tel que les bordures longitudinales du matériau en bande revêtue de matière plastique sont amenées en aboutement l'une à côté de l'autre et sont reliées au moyen d'un soudage au laser, et
**caractérisé en ce que**
lors du profilage du corps creux, comme par exemple un poteau de clôture avec barrettes de fixation, l'arête d'aboutement longitudinale du matériau en bande est positionnée sur une surface profilée de façon décentrée par rapport au plan médian de la surface, de telle façon qu'il est possible de ménager des arrachements et/ou des trous dans une zone de surfaces exemptes de cordon de soudure.

2. Procédé selon la revendication 1,
**caractérisé en ce que** les arêtes d'aboutement libres du matériau en bande revêtue de matière plastique sont soumises, avant le soudage au laser, à une étape de prétraitement dans laquelle en particulier les arêtes d'aboutement libres sont rectifiées au moyen d'une étape de prétraitement mécanique, comme raclage, fraisage, meulage ou similaire, pour donner une transition émoussée, et on exécute en particulier au niveau des surfaces des arêtes d'aboutement libres un enlèvement partiel du revêtement de matière plastique ou du revêtement en laque.

3. Procédé selon la revendication 1 ou 2,
**caractérisé en ce que**, après le soudage au laser, la région du cordon de soudure est soumise à une étape de post-traitement, en particulier un recouvrement avec un matériau non métallique.

4. Procédé selon la revendication 3,
**caractérisé en ce que**, à titre de recouvrement en matériau non métallique, on exécute un recouvrement avec une colle thermofusible et/ou avec une laque, et on pulvérise au moyen d'une tête de pulvérisation en particulier une laque à durcissement rapide sous lumière ultraviolette.
